# EUROPEAN PATENT APPLICATION

(11) **EP 1 847 312 A1**
(43) Date of publication of application: **24.10.2007**
(21) Application number: 06007979.5
(22) Date of filing: 18.04.2006
(51) Int. Cl.: B01J 2/10

(54) **Wet granulator with a granulating liquid supply**

(71) Applicant: HEXAL AG, 83607 Holzkirchen (DE)
(72) Inventor: Hope, Andreas, 39108 Magdeburg (DE)
(74) Representative: Forstmeyer, Dietmar

(57) **Abstract**

The invention relates to a wet granulator (1) with a granulating liquid supply (3). The granulator (1) comprises a container (4), having a bottom part (5) and a head part (6). The container (4) comprises an input opening (7) for supplying said bottom part (5) with powder and/or particles to be granulated with the aid of said granulating liquid (2) and an output opening (8) to exit the produced granulates. The bottom part (5) comprises a multi blade impeller (9) driven by a drive motor (10) beneath the container (4) or driven by a shaft extending through said head part (6) with a drive motor on top of said container (4). An auxiliary chopper (11) is positioned above said impeller (9). The granulating liquid supply (3) comprises an irrigation nozzle (12), which is positioned in said head part (6) inside said container (4) and comprises a nozzle plate (13) having a plurality of through holes (17) providing liquid beams (18) of granulating liquid (12) directed toward said bottom part (5) of said container (4).

## Description

The invention relates to a wet granulator with a granulating liquid supply. The granulator comprises a container, having a bottom part and a head part. Further, the container comprises an input opening for supplying said bottom part with powder and/or particles to be granulated with the aid of said granulating liquid and an output opening to exit the produced granulates.

Such a wet granulator like a fluidized-bed granulator is known from the thesis "Einsatzmöglichkeiten des Hüttlin Kugelcoaters unter Einbeziehung von Simulationen", Karin Wöstheinrich, University of Tübingen, Fakultät für Chemie und Pharmazie, 2000. Fluidized-bed granulators have a similar design and operation to fluidized-bed driers, i.e. the powder particles are fluidized in a stream of air, but additionally granulation fluid is sprayed from a nozzle onto the bed of powders.

Heated and filtered air is blown or sucked through the bed of unmixed powders to fluidize the particles and mix the powders. Granulating fluid is pumped from a reservoir through a spray nozzle positioned over the bed of particles. The fluid causes the primary powder particles to adhere when the droplets and powders collide. Escape of material from the granulation chamber is prevented by exhaust filters, which are periodically agitated to reintroduce the collected material into the fluidized bed. Sufficient liquid is sprayed to produce granules of the required size, at which point the spray is turned off, but the fluidizing air stream continued. The wet granules are then dried in the heated fluidizing air stream.

The disadvantages of such fluidized-bed granulators are, that the equipment is initially expensive, particularly on the downside of the container. A further disadvantage is, that the optimization of the process and product requires extensive development work.

This long and very product-specific development process has proved to be a serious problem in the pharmaceutical industry. There are numerous apparatus, process and product parameters that effect the quality of the final granule produced by a wet fluidized-bed granulator. Since air is blown into the bottom side to fluidize the powder and/or particles to be granulated, one apparatus problem is caused by an air distribution plate of the bottom part in conjunction with the shape of the granulator body at the bottom part. Since the granulating liquid is supplied in a middle part by a spray nozzle to create moisturing conditions, the nozzle height, the atomization and the spray angle are further apparatus problems to be solved. Since the air is blown into the bottom side an air outlet has to be provided causing problems in respect to providing a controller for positive and/or negative pressure operation.

Each formulation presents its own individual development problems, particularly the spraying regime in respect to granulating liquid flow rate, atomizing air flow rate, atomizing air pressure and droplet size of atomized granulating liquid. These problems have led to the result, that fluidized-bed granulation has not reached the required potential in pharmaceutical production unlike other industries.

Not only during initial formulation work, but also during scale-up from development to production there are lots of problems to be solved in respect to wet granulation. From Document Faure et al. an "Applicability of scale-up methodology for the wet granulation process in Collette Gral high shear mixer granulators", Eur. J. Pharm. Sci, vol. 8, pages 85 to 93, 1999, is known. Further, from Document Wörts, O., a "Wet granulation-fluidized bed and high shear techniques comparison", Pharm. Techn., Europe, 10(11), pages 27-30 (1998) is known, disclosing a high speed wet granulator.

Therefore, it is an object of the present invention, to provide an improved wet granulator with a granulating liquid supply for high speed granulation for pharmaceuticals overcoming the apparatus problems of known granulators, in particular the problem of supplying the granulating liquid in a short period of time required for high speed granulators.

This problem is solved by a wet granulator according to the subject matter of the independent claim. Preferable embodiments of the present invention are disclosed with the features of dependent claims.

According to the present invention a wet granulator with a granulating liquid supply is provided. The granulator comprises a container, having a bottom part and a head part. The container comprises an input opening for supplying said bottom part with powder and/or particles to be granulated with the aid of said granulating liquid and an output opening to exit the produced granulates. The bottom part comprises a multi blade impeller driven by a drive motor beneath the container or driven by a shaft extending through said head part with a drive motor on top of said container. An auxiliary chopper is positioned above said impeller. The granulating liquid supply comprises an irrigation nozzle, which is positioned in said head part inside said container and comprises a nozzle plate having a plurality of through holes providing liquid beams of granulating liquid directed toward said bottom part of said container.

The advantage of said wet granulator is, that it can be used extensively in pharmaceutics. The granulator has a mixing bowl containing said multi-blade impeller in the bottom part of said container. The impeller revolves in a horizontal plane and a multi blade chopper which revolves either in the vertical or the horizontal plane is positioned above said impeller.

The unmixed dry powders and/or particles are placed in the bottom part and mixed by the rotating impeller for a few minutes. Granulating liquid is then added via a port in the lid of the head part of the granulator by an irrigation nozzle. The irrigation nozzle is positioned in said head part inside said container and comprises a nozzle plate having a plurality of through holes providing liquid beams of granulating liquid directed toward said bottom part of said container while the impeller is turning. The granulating liquid is mixed into the powders by the impeller. The chopper is usually switched on when the wetted mass is formed, as its function is to break up the wetted mass to produce a bed of granular material. Once a satisfactory granule has been produced, the granular product is discharged, passing through a wire mesh which breaks up any large aggregates.

The advantage of the wet granulator is that mixing, massing and granulation are all performed within a few minutes in the same piece of equipment. The granulator needs to be controlled with care as the granulation progresses so rapidly that a usable granule can be transformed very quickly into an unusable, over-massed system. Thus in a preferred embodiment of the invention, a suitable monitoring system is added to the wet granulator to indicate the end of the granulation process, i.e. when a granule of the desired properties has been attained. The process is also sensitive to variations in raw materials, but this can be minimized by a suitable end-point monitor added to the wet granulator.,

A variation of the above wet granulator is based on a bowl and an overhead drive driven by a shaft extending through said head part and provided with a drive motor on top of said container. The single shaft can be preferably replaced by two mixing shafts. One of these shafts carries blades, which rotate in the horizontal plane at the bottom part of the bowl like an impeller, and the second carries smaller blades which act as a chopper and rotate in the horizontal or vertical plane above the region of the impeller. Thus the operation principle is quite similar to the above wet granulator.

In such a wet granulator primary powder particles are made to adhere to form larger, multi particle entities called granules. Pharmaceutical granules typically have a size range between 0.2 and 4.0 mm, depending on their subsequent use. In the majority of cases this will be in the production of tablets or capsules, when granules will be made as an intermediate product and have a typical size range between 0.2 mm and 0.5 mm.

Granulation normally commences after initial dry mixing of the necessary powdered ingredients so that a uniform distribution of each ingredient through the mix is achieved. After granulation, the granules will either be packed or they may be mixed with other excipients prior to tablet compaction or capsule filling.

The wet granulator of the present invention performs the massing of a mix of dry primary powder particles using a granulating liquid. The liquid preferably contains a solvent which is volatile so that it can be removed by drying, and is normally non-toxic. In a preferred embodiment the diameter of the through holes of the nozzle plate are adjusted in respect to a supply pressure of said granulating liquid and the viscosity of said granulating liquid, particularly to the viscosity of water, ethanol, isopropanol or combinations thereof and/or mixtures with dissolved adhesives, preferably polyvinylpyrrolidone, or carboxymethylcellulose, or pregelatinized starch.

The granulation liquid may be used alone or as a solvent containing a dissolved adhesive as a binder or binding agent, which advantageously ensures particle adhesion once the granule is dry.

Water is preferably used for economical and ecological reasons. The primary advantage of water is that it is non-flammable, which means that expensive safety precautions such as the use of flameproof equipment for the wet granulator need not be taken.

Organic solvents are used when water-sensitive drugs are processed to prevent hydrolysis of susceptible products, or when a rapid drying time is required or the drying heat has to be reduced.

In a traditional wet granulation method the wet mass is forced through a sieve to produce wet granules which are then dried. A subsequent screening stage breaks agglomerates of granules and removes the fine material, which can than be recycled. Variations of this traditional method depend on the equipment used, but the general principle of initial particle aggregation using a liquid remains in all of the processes, wherein the present apparatus has the advantage, that any subsequent screening is omitted.

The wet granulators capacity significantly influences the work input and time necessary to produce a cohesive mass, adequate liquid distribution and intragranular porosity of the granular mass. The method and conditions of granulation affect intragranular structure and intragranular pore structure by changing the degree of packing within the granules. Granules prepared by wet massing consist of intact drug particles held together in a sponge-like matrix of binder. Thus the properties of the granule are influenced by the manufacturing process.

During wet granulation liquid is added to the powder mix and will be distributed as films around and between the particles. Sufficient liquid is usually added to exceed that necessity for an immobile layer and to produce a mobile film. There are three states of water distribution between particles.

At low wetting levels, termed the pendular state, the particles are held together by lens-shaped rings of liquid. These cause adhesion because of the surface tension forces of the liquid/air interface and the hydrostatic suction pressure in the liquid bridge. When all the air has been displaced from between the particles the capillary state is reached, and the particles are held by capillary suction at the liquid/air interface, which is now only at the granule surface. The funicular state represents an intermediate stage between the pendular and capillary states. Wet granule tensile strength increases about three times between the pendular and the capillary state. Therefore the design of the irrigation nozzle is important for a high speed wet granulator.

It may appear that the state of the powder bed is dependent upon the total granulating liquid content of the wetted powders, but the capillary state may also be reached by decreasing the separation of the particles. In the massing process during wet granulation, continued kneading/mixing of material originally in the pendular state will densify the wet mass, decreasing the pore volume occupied by air and eventually producing the funicular of capillary state without further liquid addition.

These wet bridges are only temporary structures in wet granulation because the wetted granules will be dried. They are, however, a prerequisite for the formation of solid bridges formed by adhesives present in the liquid, or by materials that are dissolved in the granulating liquid.

In pharmaceutical wet granulations hardening of binders is an important mechanism when an adhesive is included in the granulating solvent. The liquid will form liquid bridges to bind the particles. Adhesives such as polyvinylpyrrolidone, cellulose derivatives such as carboxymethylcellulose and pregelatinized starch function in this way. The solvent used to mass the powder during wet granulation may partially dissolve one of the powdered ingredients. When the granules are dried, crystallization of this material will take place and the dissolved substance then acts as a hardening binder. Any material soluble in the granulating liquid will function in this manner, e.g. lactose incorporated into dry powders granulated with water.

The size of the crystals produced in the bridge will be influenced by the rate of drying of the granules: the slower the drying time, the larger the particle size. It is, therefore, important that the drug does not dissolve in the granulating liquid and recrystallize, because it may adversely affect the dissolution rate of the drug if crystals larger than that of the starting material are produced.

In wet granulation methods, liquid added to dry powders has to be distributed through the powder by the mechanical agitation created in the granulator. The particles adhere to each other because of liquid films, and further agitation and/or liquid addition causes more particles to adhere. The precise mechanism by which a dry powder is transformed into a bed of granules varies for each type of granulation equipment.

Granulation starts with particle-particle contact and adhesion due to liquid bridges. A number of particles will join to form the pendular state as mentioned above. Further agitation densifies the pendular bodies to form the capillary state, and these bodies act as nuclei for further granule growth. Nuclei can grow in two possible ways: either single particles can be added to the nuclei by pendular bridges, or two or more nuclei may combine. The combined nuclei will be reshaped by the agitation of the bed.

This stage is characterized by the presence of a large number of small granules with a fairly wide size distribution. Provided that this distribution is not excessively large, this is a suitable end-point for granules used in capsule and tablet manufacture, as relatively small granules will produce a uniform tablet die or capsule fill monitored by said end-point monitor of a preferred embodiment of the invention. Larger granules may give rise to problems in small-diameter dies owing to bridging across the die and uneven fill.

Further granule growth produces large, spherical granules and the mean particle size of the granulating system will increase with time. If agitation is continued, granule coalescence will continue and produce an unusable, over massed system, although this is dependent upon the amount of liquid added by said irrigation nozzle and the properties of the material being granulated.

When a second batch of powder mix is added to a bed of granules the powder will adhere to the granules, forming a layer over the surface and increasing the granule size. This mechanism is preferably relevant to the production of layered granules.

There will be some degree of overlap between the above described stages of granulation of powders and/or particles and it will be very difficult to identify a given stage by inspection of the granulating system. For end-product uniformity it is desirable to finish every batch of a formulation at the same stage, and this major problem in pharmaceutical production is solved by the present invention.

With faster granulation equipment, the duration of granulation can only be used as a control parameter when the formulation is such that granule growth takes place but is slow. In the present wet granulator, the transition from a non-granulated to an over-massed system is very rapid, and monitoring equipment is therefore added to the wet granulator to stop the granulation at a predetermined point known as granulation end-point control.

In a preferred embodiment, the wet granulator comprises in the head part of its container a through pipe for guiding, parallel to the centre of said container, granulating liquid through a mouth piece at the end of said through pipe toward the irrigation nozzle. This pipe comprises telescopic elements at least within said container to vary the distance between said nozzle and said impeller.

In an other preferred embodiment, the nozzle plate having said through holes for the granulating liquid is positioned perpendicular to the centre of said through pipe, so that the liquid is advantageously irrigated in form of liquid beams toward the powder and/or particle bed. The nozzle plate is provided with liquid, since said through pipe comprises an opening of the mouth piece positioned at the centre of said nozzle.

An important aspect of the present invention relates to the fact, that said irrigation nozzle should be able to wet the powder and/or particles within a short period of time. This is achieved by different preferred arrangements of the through holes in the nozzle plate, which is preferable planar.

In one of these preferred arrangements, said through holes are arranged through and across, resp., said nozzle plate in rows, wherein the pitch between, said through holes is constant. In an other preferred arrangement said through holes are arranged through and across, resp., said nozzle plate in rows, wherein the pitch between said through holes is gradually increasing toward the centre of said container. Further it is preferred that said through holes are arranged through and across, resp., said nozzle plate in rows, wherein said rows are radially aligned toward the centre of said container. This arrangement takes into account that the container is of cylindrical shape.

Furthermore, the nozzle plate comprises a rebounding part, which is positioned opposite to said mouth piece of said through pipe. This rebounding part deviates the flow of granulating liquid toward the through holes surrounding said rebounding part of said nozzle plate. In a preferred embodiment of the invention, said through holes are arranged in parallel rows on both sides of said rebounding part of said nozzle plate.

In a further embodiment, the number of rows gradual increases toward the inner wall of said container. This arrangement has the advantage, that the volume of granulating liquid passing said through holes is adjusted proportional to the increasing area of a circular particle bed in the bottom part of the granulator toward the inner wall of said container. The same effect can be achieved when the diameter of through holes in one row gradually decreases toward the centre of said container.

The nozzle preferably comprises a nozzle body fixed to said mouth piece of said pipe, wherein said body has an opening on top and a plate holder frame at the bottom and said nozzle plate is positioned there between, and wherein a seal is arranged in a groove in said nozzle body between said nozzle bottom and said nozzle plate. The nozzle body is shaped to provide a space between the incoming mouth piece of the supply pipe and the inner surface of the nozzle plate, to supply each through hole with said granulating liquid.

The invention is now explained with reference to the attached drawings.

Figure 1 shows a schematic cross section of a wet granulator with a granulating liquid supply according to an embodiment of the present invention.

Figure 2 shows a schematic view into the wet granulator according to figure 1, wherein the lid of the container is omitted.

Figure 3 shows a schematic cross section of an irrigation nozzle according to an embodiment of the present invention.

Figure 4 shows a schematic view onto a nozzle plate of the irrigation nozzle of Figure 3.

Figure 5 shows a schematic view onto a mounting frame for the nozzle plate on to the body of said irrigation nozzle of Figure 3.

Figures 6 to 8 show schematic views onto different arrangements of through holes of the nozzle plate.

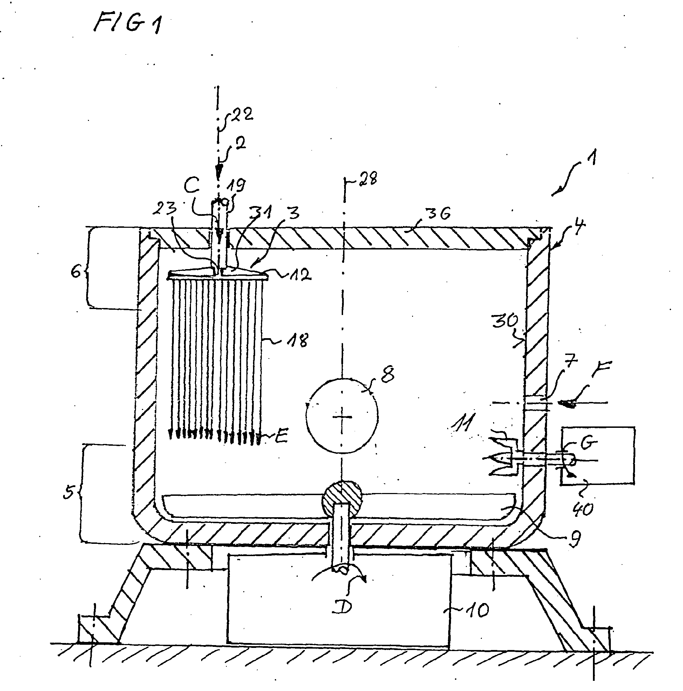

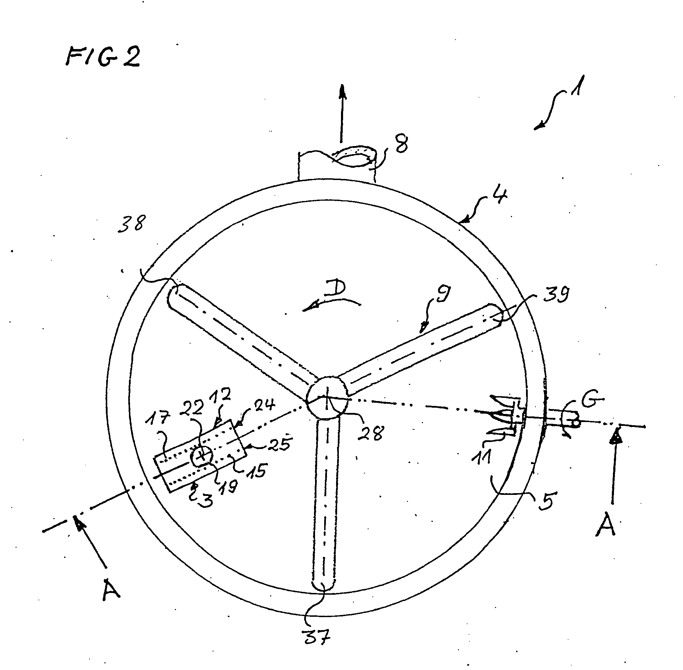

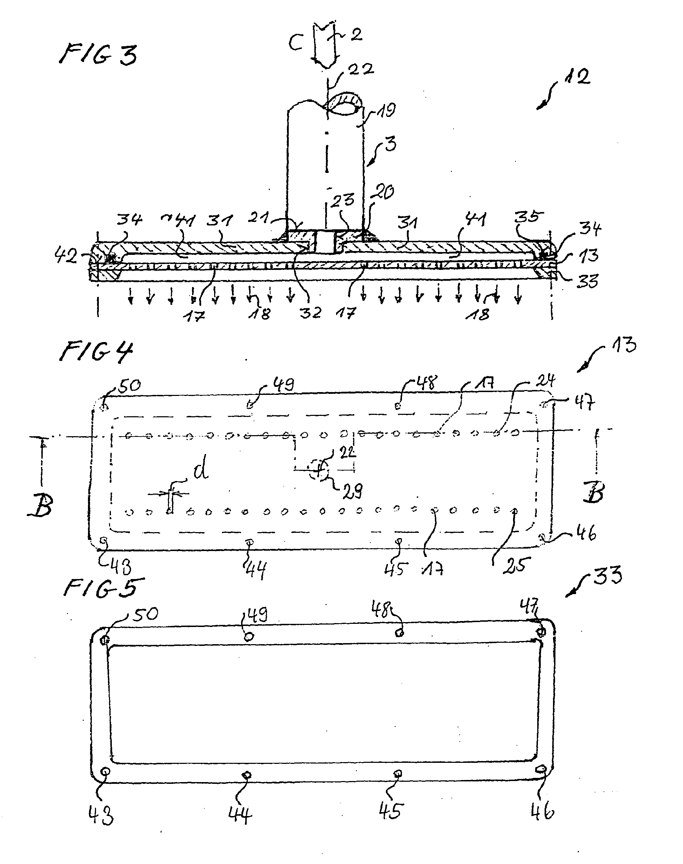

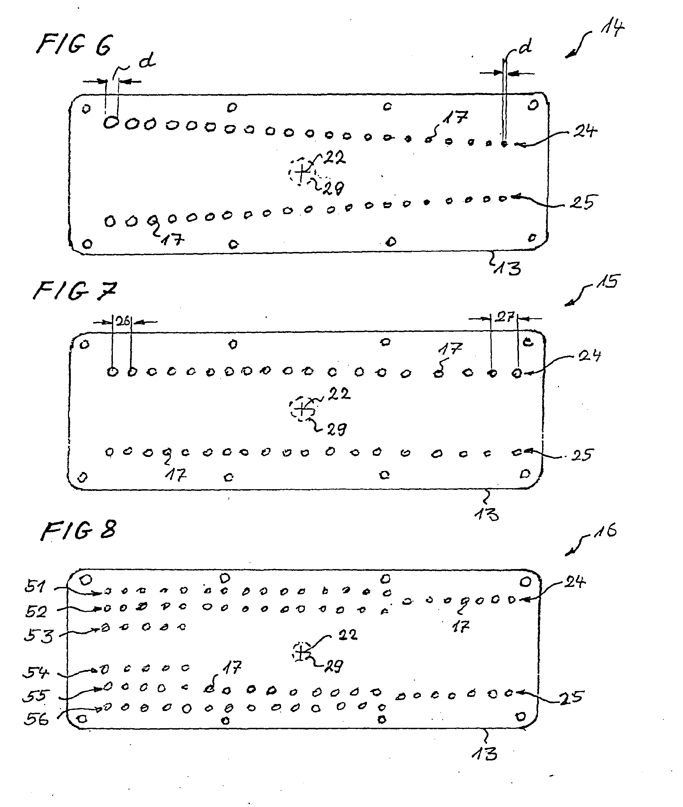

Figure 1 shows a schematic cross section of a wet granulator 1 with a granulating liquid supply 3 according to an embodiment of the present invention. This cross section is taken along a cross section plane A-A shown in Figure 2. The granulator 1 comprises a container 4, having a bottom part 5 and a head part 6. The container 4 comprises an input opening 7 for supplying said bottom part 5 with powder and/or particles to be granulated with the aid of said granulating liquid 2 and an output opening 8 to exit the produced granulates.

The bottom part 5 comprises a three blade impeller 9 driven by a drive motor 10 beneath the container 4. The impeller 9 revolves in a horizontal plane, so that the unmixed dry powders und/or particles passed via the input opening 7 in the direction of arrow F into the bottom part 5 are mixed by the rotating impeller 9 for a few minutes.

Granulating liquid 2 is then added in the direction of arrow C via a through pipe 19 in the lid 36 of the head part 6 of the granulator 1 by an irrigation nozzle 12. The irrigation nozzle 12 is positioned in said head part 6 inside said container 4 and comprises a nozzle plate having a plurality of through holes. The through holes provide liquid beams 18 of granulating liquid 2 directed along the arrows E toward said bottom part 5 of said container 4 while the impeller 9 is turning in the arrow direction D. The granulating liquid 2 is mixed into the powders by the impeller 9.

An auxiliary chopper 11 is positioned above said impeller 9 protruding from the inner wall 30 of the container 4. Multi blade chopper 11 revolves in this embodiment in the vertical plane, driven by an auxiliary motor in the direction of arrow G. The multi blade chopper 11 is usually switched on when the wetted mass is formed, as its function is to break up the wetted mass to produce a bed of granular material. Once a satisfactory granulate has been produced, the granular product is discharged through the output opening 8 passing through a wire mesh which breaks up any large aggregates.

Figure 2 shows a schematic view into the wet granulator 1 according to figure 1, wherein the lid of the container 4 is omitted. The three blade impeller 9 in the bottom part of the container 4 has three blades 37 to 39 and revolves in a horizontal plane in the direction identified by an arrow D. In the head part of the container 4 the arrangement of the irrigation nozzle 12 is shown. It has a rectangular shape, wherein its long side is directed toward the centre 28 of the container 4. Two rows 24 and 25 of through holes 17 on both sides of the through pipe 19 distribute the granulating liquid toward the bottom part of the container 4.

Figure 3 shows a schematic cross section of an irrigation nozzle 12 according to an embodiment of the present invention. This cross section is taken along a cross section plane B-B shown in figure 4. The irrigation nozzle 12 comprises a nozzle body 31 fixed to a mouth piece 20 of the through pipe 19. The nozzle body 31 has an opening 32 on top, which fits to the mouth piece 20 with its opening 23, so that granulating liquid 2 can pass through the cavity 41 of the nozzle body 31 toward the through holes 17 of the nozzle plate 13 which is fixed to the bottom 42 of the nozzle body 31 by a plate holder frame 33. Thus the nozzle plate 13 is positioned between the bottom 42 of the nozzle body 31 and the plate holder frame 33. At the bottom 42 of the nozzle body 31 is placed a groove 35 holding a seal 34 to tighten the nozzle plate 13.

Figure 4 shows a schematic view onto a nozzle plate 13 of the irrigation nozzle 12 of figure 3. This nozzle plate 13 comprises two rows 24 and 25 of through holes 17 beside an rebounding part 29 or area of the nozzle plate 13 opposite to the opening 23 of the mouth piece 20 at the end 21 of the through pipe 19 shown in figure 1. This rebounding part 29 inhibits the granulating liquid 2 passing directly with high speed under high pressure through the through holes 17, since it is positioned perpendicular to the centre 22 of the through pipe 19 shown in figure 1. Further, there are 8 through holes 43 to 50 to fasten the nozzle plate 13 preferably, by screws, toward the bottom of the nozzle body.

Figure 5 shows a schematic view of a holder frame 33 for the nozzle plate, to mount the nozzle plate to the body of said irrigation nozzle. This plate holder frame 33 has eight through holes 43 to 50 which can be aligned with the through holes 43 to 50 of the nozzle plate 13 shown in figure 4 to be fixed at the bottom of the nozzle body.

Figures 6 to 8 show schematic views of different arrangements 14 to 16 of through holes 17 through the nozzle plate.

Figure 6 shows a schematic view of a second arrangement 14 of through holes 17 through the nozzle plate 13. The through holes 17 are arranged in two rows 24 and 25 and are aligned toward the centre of the container. To equalize the amount of granulating liquid provided from the inner wall of the container toward the centre, the diameter d of the through holes 17 decreases gradually toward the centre.

Figure 7 shows a schematic view of a third arrangement 15 of through holes 17 through the nozzle plate 13. The through holes 17 are arranged in two rows 24 and 25 parallel to each other. The pitch 26, 27 of the through holes of each row 24 and 25 gradually increases toward the centre of the container to equalize the amount of granulating liquid provided from the inner wall of the container toward the centre of the container.

Figure 8 shows a schematic view of a fourth arrangement 16 of through holes 17 through the nozzle plate 13. The through holes 17 are arranged in a plurality of parallel rows 24, 25 and 51 to 56, wherein the number of rows is decreasing toward the centre of the container to equalize the amount of granulating liquid provided from the inner wall of the container toward the centre of the container.

### Reference signs

- 1: wet granulator
- 2: granulating liquid
- 3: granulating liquid supply
- 4: container
- 5: bottom part
- 6: head part
- 7: input opening
- 8: output opening
- 9: multi blade impeller
- 10: drive motor
- 11: chopper
- 12: irrigation nozzle
- 13: nozzle plate (first arrangement)
- 14: nozzle plate (second arrangement)
- 15: nozzle plate (third arrangement)
- 16: nozzle plate (forth arrangement)
- 17: through hole
- 18: liquid beam
- 19: through pipe
- 20: mouth piece
- 21: end of through pipe
- 22: centre of through pipe
- 23: opening of mouth piece
- 24: row
- 25: row
- 26: pitch
- 27: pitch
- 28: centre of container
- 29: rebounding part or rebounding area
- 30: inner wall of container
- 31: nozzle body
- 32: opening of nozzle body
- 33: plate holder frame
- 34: seal
- 35: groove
- 36: lid
- 37: blade
- 38: blade
- 39: blade
- 40: auxiliary motor
- 41: cavity of nozzle body
- 42: bottom of nozzle body
- 43: through hole
- 44: through hole
- 45: through hole
- 46: through hole
- 47: through hole
- 48: through hole
- 49: through hole
- 50: through hole
- 51: row of through holes
- 52: row of through holes
- 53: row of through holes
- 54: row of through holes
- 55: row of through holes
- 56: row of through holes
- A-A: cross section plane
- B-B: cross section plane
- d: diameter
- C: arrow
- D: arrow
- E: arrow
- F: arrow
- G: arrow

## Claims

1. Wet granulator with a granulating liquid supply (3), wherein the granulator (1) comprises a container (4) having a bottom part (5) and a head part (6), wherein said container (4) comprises an input opening (7) for supplying said bottom part (5) with powder and/or particles to be granulated with the aid of said granulating liquid (2) and an output opening (8) to exit the produced granulates, wherein said bottom part (5) comprises an impeller (9) driven by a drive motor (10), and an auxiliary chopper (11) positioned above said impeller (9), wherein said granulating liquid supply (3) comprises an irrigation nozzle (12) positioned in said head part (6) inside said container (4), wherein said irrigation nozzle (12) comprises a nozzle plate (13) having a plurality of through holes (17) providing liquid beams (18) of granulating liquid (2) directed toward said bottom part (5) of said container (4).

2. Granulator according to claim 1, wherein said container (4) comprises in the head part (6) a through pipe (19) for guiding granulating liquid (2) through a mouth piece (20) at the end (21) of said through pipe (19) toward the irrigation nozzle (12).

3. Granulator according to claim 2, wherein through pipe (19) comprises telescopic elements at least within said container (4) to vary the distance between said irrigation nozzle (12) and said impeller (9).

4. Granulator according to claim 2, wherein said nozzle plate (13) is positioned perpendicular to the centre (22) of said through pipe (19).

5. Granulator according to one of claims 2 to 4, wherein said through pipe (19) is positioned between the center (28) of said container (4) and the inner wall (30) of said container (4).

6. Granulator according to one of claims 2 to 5, wherein said through pipe (19) comprises an opening (23) of said mouth piece (20) provided at the centre of said irrigation nozzle (12).

7. Granulator according to one of the previous claims, wherein said through holes (17) are arranged through said nozzle plate (13) in rows (24, 25), wherein the pitch (26) between said through holes (17) is constant.

8. Granulator according to one of the claims 1 to 6, wherein said through holes (17) are arranged through said nozzle plate (13) in rows (24, 25), wherein the pitch (26, 27) between said through holes (17) increases gradually toward the centre (28) of said container (4).

9. Granulator according to one of the claims 1 to 6, wherein said through holes (17) are arranged through said nozzle plate (13) in rows (24, 25), wherein said rows (24, 25) are radially aligned toward the centre (28) of said container (4).

10. Granulator according one of claims 2 to 9, wherein said nozzle plate (13) comprises a rebounding part (29), which is positioned opposite to said mouth piece (20) of said through pipe (19).

11. Granulator according to claim 10, wherein said rebounding part (29) is surrounded by said through holes (17).

12. Granulator according to claim 10, wherein said through holes (17) are arranged in parallel rows (24, 25) on both sides of said rebounding part (29).

13. Granulator according to one of claims 7 to 12, wherein the number of rows (24, 25) is increasing gradually toward the inner wall (30) of said container (4).

14. Granulator according to claim 7 to 13, wherein the diameter (d) of through holes (17) in each row (24, 25) decreases gradually toward the centre (28) of said container (4).

15. Granulator according to one of the claims 1 to 14, wherein the diameter (d) of said through holes is adjusted in respect to a supply pressure of said granulating liquid (2) and the viscosity of said granulating liquid (2), particularly to the viscosity of water, ethanol, isopropanol or combinations thereof and/or mixtures with dissolved adhesives, preferably polyvinylpyrrolidone, or carboxymethylcellulose, or pregelatinized starch.

16. Granulator according to one of claims 2 to 15, wherein said irrigation nozzle (12) comprises a nozzle body (31) fixed to said mouth piece (20) of said through pipe (19), wherein said nozzle body (31) has an opening (32) on top and a plate holder frame (33) at the bottom and said nozzle plate (13) is positioned there between, wherein a seal (34) is arranged in a groove (35) in said nozzle body (31) between said nozzle bottom (42) and said nozzle plate (13).

17. Granulator according to one of claims 1 to 16, wherein the impeller (9) is a multi blade impeller.

18. Granulator according to one of claims 1 to 17, wherein the impeller (9) is driven by a drive motor (10) beneath the container (4) or driven by a shaft extending through said head part (6) with a drive motor on top of said container (4) .
